# EUROPEAN PATENT SPECIFICATION

(11) **EP 4 084 348 B1**
(45) Date of publication and mention of the grant of the patent: **01.10.2025**
(21) Application number: 21743724.3
(22) Date of filing: 19.01.2021
(51) Int. Cl.: H04B 3/54, H04L 5/22

(54) **TIME SLOT ALLOCATION METHOD AND APPARATUS FOR POWER LINE COMMUNICATION**
ZEITSCHLITZ-ZUWEISUNGSVERFAHREN UND -VORRICHTUNG FÜR DIE STROMLEITUNGSKOMMUNIKATION
PROCÉDÉ ET APPAREIL D'ATTRIBUTION DE CRÉNEAUX TEMPORELS POUR COMMUNICATION PAR COURANTS PORTEURS EN LIGNE

(30) Priority: 23.01.2020 CN 202010076048
(43) Date of publication of application: 02.11.2022
(73) Proprietor: Huawei Technologies Co., Ltd., Shenzhen, Guangdong 518129 (CN)
(72) Inventor: CAI, Wenchao, Shenzhen, Guangdong 518129 (CN); ZENG, Yan, Shenzhen, Guangdong 518129 (CN)
(74) Representative: Isarpatent
(86) International application number: PCT/CN2021/072710
(87) International publication number: WO 2021/147860

(56) References cited:
- EP-A1- 2 164 211
- WO-A1-2015/062479
- WO-A2-2010/126282
- CN-A- 101 895 931
- CN-A- 109 548 084
- CN-A- 110 035 509
- CN-A- 110 149 711
- US-A1- 2007 274 320
- US-A1- 2018 241 432

## Description

This disclosure generally relates to the field of power line communication.

### TECHNICAL FIELD

The invention in particular relates to a timeslot assignment method for power line communication and an access point.

### BACKGROUND

In an application scenario of power line communication (power line communication, PLC), there is a requirement for long-distance and multi-level relaying. For example, light control is performed through PLC in airfield ground lighting. A maximum of a power line on a runway reaches several kilometers, and a maximum of a single-hop communication distance in PLC is about 1.2 km. Therefore, remote light control can be implemented only through multi-level relaying. For example, street lamps are controlled through PLC. Because the street lights extend over a very long distance, control information needs to be forwarded by relay nodes, to implement unified control of the street lamps.

Based on the feature of the multi-level relaying, a message such as a control message sent by a head node needs to be forwarded by a plurality of relay nodes before reaching an end node. In this case, a delay of receiving the message by the end node is relatively long. In an existing solution, sufficient time is reserved for each relay node to forward the message, and consequently efficiency of this message forwarding mode is definitely low.

WO 2015/062479 A1 describes that in a power line communication network, nodes cooperate with each other through the following elements: a Central Coordinator (CCO) is responsible for managing an entire network, which includes network establishment, access and authorization for Proxy Coordinators (PCO) and terminals, resource scheduling, coordination with multiple neighboring networks, and network power management control. The Proxy Coordinator (PCO) serves as a connector for terminals that cannot communicate directly with the CCO. There may be multiple levels of PCOs in the network. The PCO takes care of the terminals under its direct control, including slot allocation and forwarding of terminal status information. The cooperation between nodes in the network happens in the following way. The CCO allocates slots for each terminal to ensure proper communication. It sends slot allocation information to the terminals after determining the allocated slots. The slot allocation information is sent to the terminals through the broadcast of central beacons, carrying terminal status monitoring information. In case a terminal is directly controlled by a PCO, the PCO broadcasts a proxy beacon with a terminal state monitoring item for the terminals under its control. The terminals receive the slot allocation information and use the designated slots to communicate to report the status information. The terminal status monitoring method involves the cooperation and coordination between the CCO, PCO, and the terminals. By effectively allocating communication slots and monitoring terminal status via properly routing the beacons, the system can minimize transmission delays and signaling overhead while maintaining efficient and reliable power line communication.

EP 2 164 211 A1 discloses a method for selecting and managing time slots for communication among stations in a network, particularly in situations where stations share a communication medium and use time division multiplexing (TDM) techniques. The method involves collecting timing information at some stations, distributing this information to other stations, and selecting new time slots for transmission based on the collected data and several conditions. The selection process considers various factors like interference, transmit power levels, signal strength, and priority. Additionally, the document describes how stations can retransmit beacons and coordinate their transmissions depending on the network topology and communication requirements.

### SUMMARY

The object of the present invention is to provide a timeslot assignment method for power line communication, and an access point such that forwarding efficiency of a relay node can be greatly improved. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect according to the invention, the invention provides a timeslot assignment method for power line communication, applied to a multi-level power line communications network, where the multi-level power line communications network includes at least one head node, each head node is directly or indirectly connected to at least one relay node, cascading of a plurality of relay nodes may be considered as a plurality of levels, one of the at least one relay node (which may be referred to as a first relay node) is used as a representative for description, and the method includes:

The first relay node receives a first timeslot assignment message sent by an upper-level node, where the first timeslot assignment message includes forwarding information and first timeslot information; and the forwarding information includes a forwarding indication indicating that the at least one relay node needs to forward the first timeslot assignment message, and the first timeslot information includes a forwarding timeslot indication assigned to the at least one relay node and used to forward the first timeslot assignment message, and data timeslot indications assigned to a plurality of nodes and used to send service data.

The first relay node updates the first timeslot information to obtain second timeslot information, where the updating includes deleting an expired timeslot indication from the first timeslot information, the expired timeslot indication is a timeslot indication indicating that an indicated timeslot has expired, and the second timeslot information includes a data timeslot indication of at least one node that is used to send service data.

The first relay node sends a second timeslot assignment message including the forwarding information and the second timeslot information.

By using the solution in this embodiment, each relay node may delete an expired timeslot before forwarding timeslot indication information. This saves transmission resources, and prevents another node from discarding the received timeslot indication information after discovering, through parsing, that the timeslot indication information expires, to improve processing efficiency.

In a possible implementation, the updating further includes deleting a timeslot indication assigned to the first relay node from the first timeslot information, and the timeslot indication assigned to the first relay node includes a forwarding timeslot of the first relay node, or a forwarding timeslot and a data timeslot of the first relay node.

According to the invention, the updating further includes adjusting at least one timeslot indication that is not deleted, and the adjusting includes prolonging or shortening a timeslot.

In a possible implementation, forwarding information in the second timeslot assignment message includes a forwarding indication indicating that the at least one relay node needs to forward the second timeslot assignment message, and the second timeslot information includes a forwarding timeslot indication assigned to the at least one relay node and used to forward the second timeslot assignment message.

By using the solution of the invention in this regard, each relay node may flexibly adjust, based on a requirement, timeslot indication information sent to a downstream node. This avoids a problem in the conventional technology that a latest requirement cannot be met because a head node defines that timeslots are all assigned in advance without considering a subsequent transmission parameter change or the like.

In a possible implementation, timeslots separately indicated by a forwarding timeslot indication and a data timeslot indication of at least one relay node that are included in the first timeslot information are adjacent.

In a possible implementation, the first relay node may further add timeslot indication information of a new node. In this manner, an upper-level relay node may not need to set timeslot indications of excessive nodes in advance, but indicates only timeslot indications of nodes at the first lower level or the first two lower levels, and timeslot indications of nodes at a lower level may be added layer by layer by upper-level relay nodes of the nodes. In this way, a timeslot indication can be more flexible, and an actual assignment time point is closer to an assigned timeslot. This can avoid expiration, and can better meet a latest timeslot requirement.

According to a second aspect according to the invention, the invention also provides an access point, including a slot processing unit and a transceiver unit.

The transceiver unit receives a first timeslot assignment message sent by an upper-level node, where the first timeslot assignment message includes forwarding information and first timeslot information; the forwarding information includes a forwarding indication indicating that at least one relay node needs to forward the first timeslot assignment message, and the first timeslot information includes a forwarding timeslot indication assigned to the at least one relay node and used to forward the first timeslot assignment message, and data timeslot indications assigned to a plurality of nodes and used to send service data; and the plurality of nodes include the at least one relay node, and the at least one relay node includes a first relay node.

The timeslot processing unit is configured to update the first timeslot information to obtain second timeslot information, where the updating includes deleting an expired timeslot indication from the first timeslot information, the expired timeslot indication is a timeslot indication indicating that an indicated timeslot has expired, and the second timeslot information includes a data timeslot indication of at least one node that is used to send service data.

The transceiver unit is further configured to send a second timeslot assignment message including the forwarding information and the second timeslot information.

In a possible implementation, the updating includes deleting a timeslot indication assigned to the first relay node from the first timeslot information, and the timeslot indication assigned to the first relay node includes a forwarding timeslot of the first relay node, or a forwarding timeslot and a data timeslot of the first relay node.

According to the invention, the updating includes adjusting at least one timeslot indication that is not deleted, and the adjusting includes prolonging or shortening a timeslot.

In a possible implementation, forwarding information in the second timeslot assignment message includes a forwarding indication indicating that the at least one relay node needs to forward the second timeslot assignment message, and the second timeslot information includes a forwarding timeslot indication assigned to the at least one relay node and used to forward the second timeslot assignment message.

In a possible implementation, timeslots separately indicated by a forwarding timeslot indication and a data timeslot indication of at least one relay node that are included in the first timeslot information are adjacent.

According to a third aspect, an embodiment of this application provides an access point, including a processor and a transceiver. When the access point is run, the processor executes computer instructions, so that the access point performs the method according to the first aspect.

In a possible implementation, the apparatus further includes a memory. The memory is configured to store the foregoing computer instructions.

According to a fourth not claimed aspect, an embodiment of this application provides a power line communications network, including at least one head node, where each head node is at least directly or indirectly connected to one or more relay nodes, and the relay node is the foregoing access point.

### BRIEF DESCRIPTION OF DRAWINGS

FIG. 1 is a schematic diagram of a topology of PLC multi-level relaying;
FIG. 2 is a flowchart of a timeslot assignment method for power line communication according to an embodiment of the present invention;
FIG. 3 is another flowchart of a timeslot assignment method for power line communication according to an embodiment of the present invention;
FIG. 4 is a schematic diagram of timeslot assignment according to an embodiment of the present invention;
FIG. 5 is another schematic diagram of timeslot assignment according to an embodiment of the present invention;
FIG. 6 is a schematic diagram of a structure of an access point according to an embodiment of this application; and
FIG. 7 is a schematic diagram of a structure of another access point according to an embodiment of this application.

In the following description, features which in the above summary of the invention have been marked as "not claimed" or "according to the invention" are also hereinafter, when they are described and explained with reference to the drawings, to be understood as "not claimed" or "not part of the invention" or "according to the invention".

### DESCRIPTION OF EMBODIMENTS

In this specification, the claims, and the accompanying drawings of this application, terms "first", "second", "third", "fourth", and the like (if existent) are intended to distinguish between similar objects but do not necessarily indicate a specific order or sequence. It should be understood that the data termed in such a way are interchangeable in proper circumstances so that embodiments of this application described herein can be implemented in orders except the order illustrated or described herein. Moreover, terms "include", "contain" and any other variants thereof mean to cover the non-exclusive inclusion. For example, a process, a method, a system, a product, or a device that includes a list of steps or units is not necessarily limited to those expressly listed steps or units, but may include other steps or units not expressly listed or inherent to such the process, the method, the product, or the device.

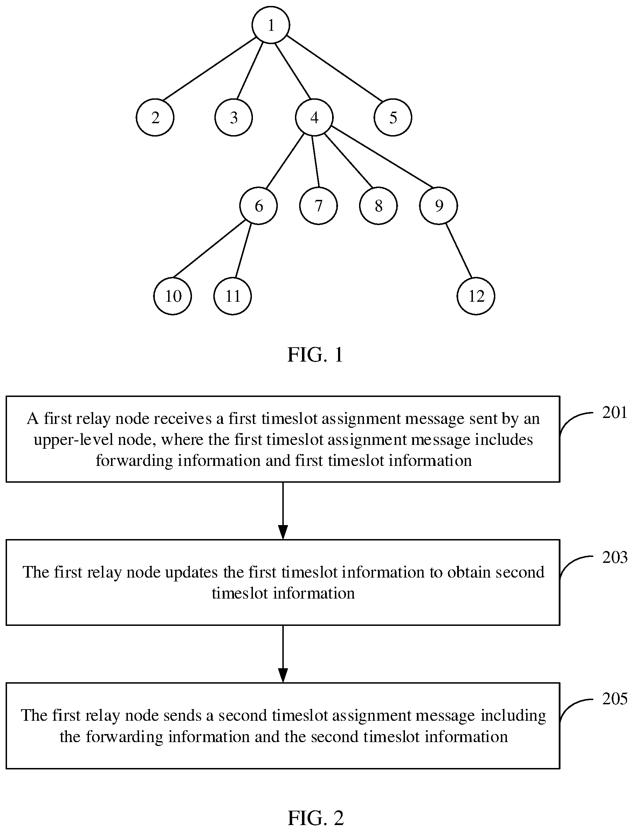

A PLC network, also referred to as a carrier communications network, is a communications network that uses low-voltage power lines as communications media to aggregate, transmit, and exchange power consumption information of low-voltage electric power users, and mainly adopts an orthogonal frequency division multiplexing technology. PLC with 1 MHz or below 1 MHz is generally referred to as narrowband PLC, PLC with a band ranging from 2 MHz to 12 MHz is referred to as mid-band PLC, and PLC with a band ranging from 2 MHz to 80 MHz is referred to as broadband PLC. As shown in FIG. 1, a PLC network generally includes a head node, a relay node, and a slave node. The head node is a central coordinator (central coordinator, CCO), and serves as a master node in the network to be responsible for completing functions such as networking control and network maintenance and management. A device entity corresponding to the head node is a concentrator local communications unit. The relay node is a proxy coordinator (proxy coordinator, PCO), is a station configured to perform data relaying and forwarding between the central coordinator and a station or between stations, and is also referred to as a proxy node. The slave node is a common station (station, STA), and serves as a slave node in the communications network. A device entity corresponding to the slave node is a communications unit, and includes an electricity meter carrier module, an I-type collector carrier module, an II-type collector, or the like. In this specification, the head node, the master node, and the central coordinator are a same concept, and for ease of description, are referred to as a CCO for short below. The relay node, the proxy node, and the proxy coordinator are a same concept, and for ease of description, are referred to as a PCO for short below.

FIG. 1 is a schematic diagram of a topology of PLC multi-level relaying. In the figure, a node 1 is a CCO, nodes 4, 6, and 9 are PCOs, and other nodes are STAs. FIG. 1 is merely an example. It should be understood that other levels may include one or more PCOs than the first level at which the CCO is located and the last level at which an end node is located. Because each node generally broadcasts a message, only a node whose distance (that is, a length of a circuit connecting various nodes) from each node falls within a specific range can receive a broadcast message. A node that cannot receive the broadcast message can only receive the message forwarded by an upper-level PCO of the node. Certainly, each node may alternatively unicast a message, that is, a target node is indicated in a sent header (Header). The two types of messages can be received by a node whose distance from each node falls within a specific range. A difference lies in that a node receiving the broadcast message parses a header and a payload (Payload), but a node receiving the unicast message discards the message and does not parse a payload after parsing the header and finding that the message is not sent to the node.

A message sending mechanism of the CCO, the PCO, and the slave node is time division multiplexing. Timeslots in which the CCO, the PCO, and the slave node can send messages are generally all assigned by the CCO. An assigned unit period includes timeslots in which the COO and each PCO send beacon (beacon) packets and timeslots in which all nodes send service data. For ease of description, the timeslot in which the PCO sends the beacon (beacon) packet is referred to as a forwarding timeslot for short below, and the timeslot in which each node sends the service data is referred to as a data timeslot for short below. The forwarded beacon packet is used to indicate timeslot assignment information. Generally, the CCO broadcasts a beacon packet to notify another node of a timeslot of the another node. Because the beacon packet broadcast by the CCO cannot directly reach a node far away from the CCO, a PCO that can receive the beacon packet forwards the beacon packet to the node far away from the CCO. The PCO forwards the beacon packet based on a timeslot assigned to the PCO in the received beacon packet. In the conventional technology, in one unit period, all forwarding timeslots are set before all data timeslots, and before forwarding a beacon packet, a PCO basically does not modify other content than some fields such as a destination node identifier. In this way, all forwarding actions need to be completed, that is, all nodes start to transmit service data only after receiving timeslots indicated by beacon packets. Even if some nodes have received the timeslots indicated by the beacon packets, the nodes can start to send service data only after a last-hop PCO completes forwarding and enters a data timeslot, causing a relatively long delay. Consequently, a large quantity of nodes wait for a long time, and node communication efficiency is very low.

An embodiment of the present invention provides a timeslot assignment method for power line communication, as shown in FIG. 2, including:
Step 201: A first relay node receives a first timeslot assignment message sent by an upper-level node, where the first timeslot assignment message includes forwarding information and first timeslot information; the forwarding information includes a forwarding indication indicating that at least one relay node needs to forward the first timeslot assignment message, and the first timeslot information includes a forwarding timeslot indication assigned to the at least one relay node and used to forward the first timeslot assignment message, and data timeslot indications assigned to a plurality of nodes and used to send service data; and the plurality of nodes include the at least one relay node, and the at least one relay node includes the first relay node.
Step 203: The first relay node updates the first timeslot information to obtain second timeslot information, where the updating includes deleting an expired timeslot indication from the first timeslot information, the expired timeslot indication is a timeslot indication indicating that an indicated timeslot has expired, and the second timeslot information includes a data timeslot indication of at least one node that is used to send service data.

Specifically, the first relay node parses the received first timeslot assignment message, identifies a timeslot indicated by each timeslot indication in the first timeslot information, and considers, based on a local clock, a timeslot that is before a current moment of the local clock as an expired timeslot. An expired timeslot indicates a time period that has passed, and has no actual meaning.

Step 205: The first relay node sends a second timeslot assignment message including the forwarding information and the second timeslot information.

By using the solution in this embodiment, each relay node may delete an expired timeslot before forwarding timeslot indication information. This saves transmission resources, and prevents another node from discarding the received timeslot indication information after discovering, through parsing, that the timeslot indication information expires, to improve processing efficiency.

The sending manner is broadcasting. The first timeslot assignment message and the second timeslot assignment message may be beacon (Beacon) packets defined in the ITU-T G.hn standard or MAP messages defined in the IEEE 1901.1 standard.

In an optional embodiment, the updating in step 205 includes deleting a timeslot indication assigned to the first relay node from the first timeslot information, and the timeslot indication assigned to the first relay node includes a forwarding timeslot of the first relay node, or a forwarding timeslot and a data timeslot of the first relay node.

According to the invention, the first relay node adjusts at least one timeslot indication that is not deleted, and the adjusting includes prolonging or shortening a timeslot.

By using the solution according to the invention, each relay node may flexibly adjust, based on a requirement, timeslot indication information sent to a downstream node. This avoids a problem in the conventional technology that a latest timeslot requirement cannot be met because a head node defines that timeslots are all assigned in advance without considering a subsequent transmission parameter change or the like.

In still another optional embodiment, the first relay node may further add timeslot indication information of a new node. In this manner, an upper-level relay node may not need to set timeslot indications of excessive nodes in advance, but indicates only timeslot indications of nodes at the first lower level or the first two lower levels, and timeslot indications of nodes at a lower level may be added layer by layer by upper-level relay nodes of the nodes. In this way, a timeslot indication can be more flexible, and an actual assignment time point is closer to an assigned timeslot. This can avoid expiration, and can better meet a latest timeslot requirement.

In still another optional embodiment, forwarding information in the second timeslot assignment message includes a forwarding indication indicating that the at least one relay node needs to forward the second timeslot assignment message, and the second timeslot information includes a forwarding timeslot indication assigned to the at least one relay node and used to forward the second timeslot assignment message.

In still another optional embodiment, timeslots separately indicated by a forwarding timeslot indication and a data timeslot indication of at least one PCO that are included in the first timeslot information are adjacent. To be specific, a data timeslot of a same PCO is after a forwarding timeslot of the PCO, and there is no gap between the two timeslots, or there is a gap but the gap is not assigned to another node. In this way, after completing forwarding, the PCO may directly send data without waiting for another node, so that data processing efficiency is improved.

As an optional feature, each of the data timeslots that are assigned to the plurality of nodes for sending the service data may be a data timeslot exclusively occupied by each node, or may be a data timeslot that can be shared by all nodes, or some nodes have exclusive timeslots, but some nodes need to preempt shared data timeslots.

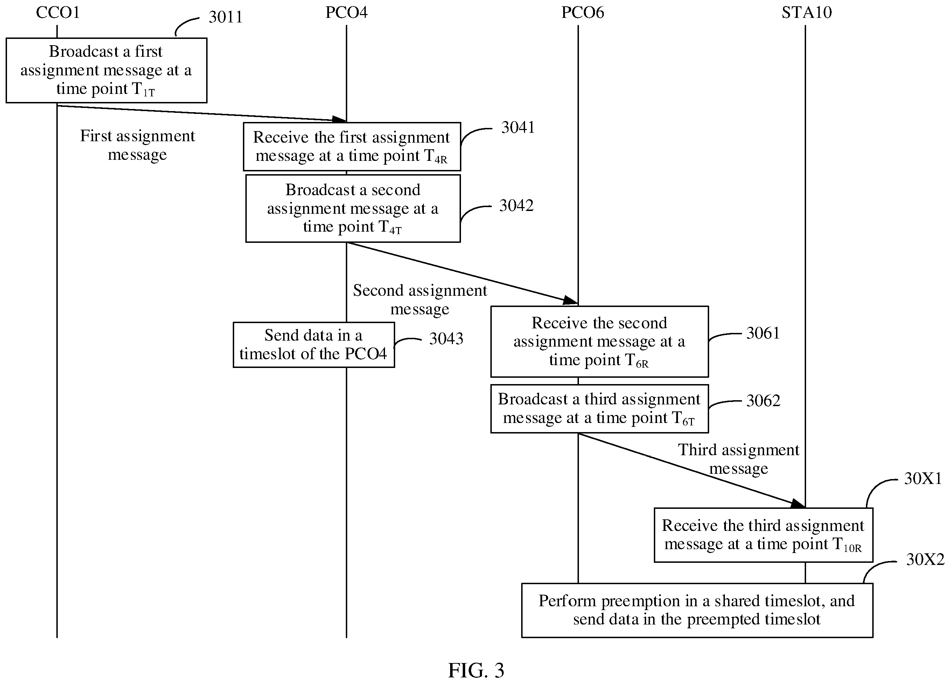

The following provides detailed description with reference to the network shown in FIG. 1. Refer to FIG. 3.

Step 3011: A node 1 serving as a CCO is marked as CCO1, constructs a first timeslot assignment message, and broadcasts the first timeslot assignment message at a time point T_{1T}, where the first timeslot assignment message includes forwarding information and first timeslot information, the forwarding information is used to indicate that all PCOs in a network need to forward the first timeslot assignment message, and the first timeslot information is used to indicate a forwarding timeslot assigned to each PCO and a data timeslot assigned to each PCO and each STA.

Step 3041: A node 4 serving as the PCO is marked as PCO4, receives the first timeslot assignment message at a time point T_{4R}, and then updates the first timeslot information in the first timeslot assignment message to obtain second timeslot information, where the updating includes deleting an expired timeslot indication from the first timeslot information, and optionally adjusting an unexpired timeslot indication. Details are described below.

Step 3042: PCO4 broadcasts a second timeslot assignment message including the forwarding information and the second timeslot information at a time point T_{4T} in the forwarding timeslot assigned to PCO4.

Step 3043: If the data timeslot assigned to PCO4 is after the forwarding timeslot of PCO4, the PCO sends service data in the data timeslot of the PCO.

PCO6 is also a relay node, and processing of PCO6 is similar to that of PCO4.

Step 3061: PCO6 receives the second timeslot assignment message at a time point T_{6R}, and then updates the second timeslot information in the second timeslot assignment message to obtain third timeslot information, where the updating includes deleting an expired timeslot indication from the second timeslot information, and optionally adjusting an unexpired timeslot indication.

Step 3062: PCO6 broadcasts the third timeslot assignment message including the forwarding information and the third timeslot information at a time point T_{6T} in the forwarding timeslot assigned to PCO6.

Step 30X1: A node 10 serving as an ordinary station is marked as STA10, and receives the third timeslot assignment message at a moment T_{10R}.

Step 30X2: If there is a shared timeslot assigned to all nodes (including an ordinary station and a relay node) after T_{10R}, STA10 performs timeslot preemption, and if at least a part of the timeslot is preempted, STA10 sends service data in the preempted timeslot. If the preemption fails, STA10 waits for another data timeslot indication. If there is a timeslot assigned exclusively to STA10 after T_{10R}, STA10 sends service data in the timeslot.

It should be noted that, nodes 2, 3, 5, 7, 8, 11, and 12 are also ordinary stations and can receive the timeslot assignment message broadcast by CCO1, PCO4, or PCO6; and the nodes send service data based on data timeslot indications assigned to the nodes in the message. Processing is similar to that of STA10. FIG. 3 does not show processing steps of the nodes. Certainly, each of data timeslots assigned to the nodes may be a timeslot exclusively occupied by a specific node, or may be a timeslot shared by a plurality of nodes but needs to be preempted.

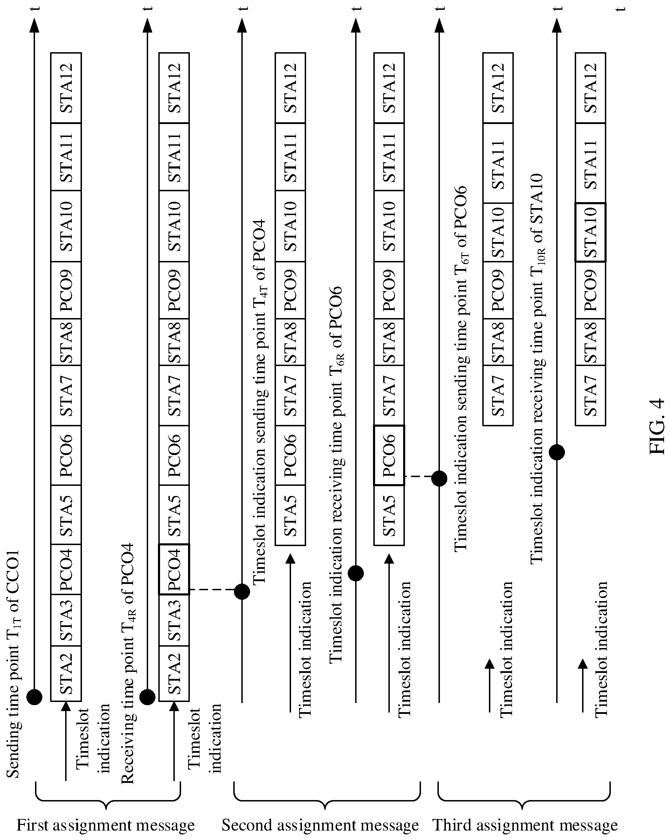

The following describes timeslot indication adjustment in FIG. 3 with reference to FIG. 4. As shown in FIG. 4, a first timeslot assignment message broadcast by node 1 at a time point T_{1T} includes a forwarding indication indicating that node 4, node 6, and node 9 need to forward the first timeslot assignment message, and exclusive timeslot information of each of nodes 2 to 12. The timeslot information of node 4, node 6, and node 9 includes forwarding timeslot information and data timeslot information, and the timeslot information of nodes 2, 3, 5, 7, 8, 10, 11, and 12 includes only data timeslot information.

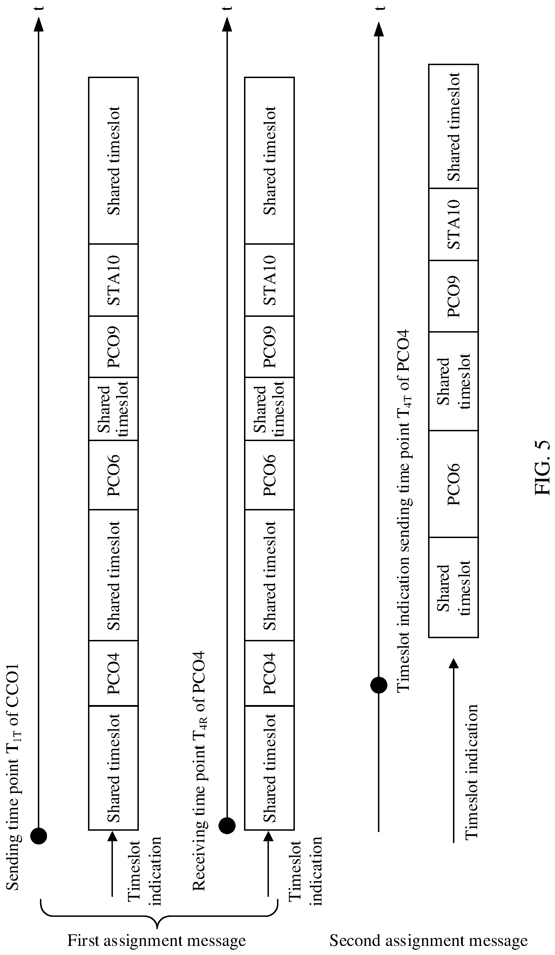

Node 4 receives the first timeslot assignment message at a time point T_{4R}. Because the time point T_{4R} is earlier than a timeslot assigned to node 4, node 4 needs to wait for the timeslot of node 4 before forwarding the timeslot assignment message and sending service data. In addition, when reaching a forwarding timeslot of node 4, timeslots assigned to nodes 2 and 3 expire, and node 4 needs to delete the timeslots. Node 4 further deletes a timeslot indication of node 4 to obtain new timeslot information, and then broadcasts the forwarding indication of the first timeslot assignment message and the new timeslot information as a second timeslot assignment message. As shown in FIG. 4, compared with the first timeslot assignment message, the current second timeslot assignment message does not include the forwarding indication of node 4 and the timeslot information of nodes 2 to 4. A sending time point T_{4T} is in the forwarding timeslot of node 4. Although in this scenario, each node has an exclusive timeslot, it may be understood that an expired shared timeslot is processed in a similar manner. As shown in FIG. 5, node 4 deletes the first expired timeslot and a timeslot of node 4, and adjusts a subsequent timeslot based on a requirement to obtain new timeslot information. In FIG. 5, timeslots marked as PCO4, PCO6, PCO9, or STA10 are separately timeslots exclusively occupied by nodes 4, 6, 9, and 10, and timeslots marked as shared timeslots are timeslots that can be preempted by all nodes.

Node 6 receives the second timeslot assignment message at a time point T_{6R}. Because the time point T_{6R} is earlier than a timeslot assigned to node 6, node 6 also needs to wait for the timeslot of node 6 before forwarding the timeslot assignment message and sending service data. In addition, when reaching a forwarding timeslot of node 6, the timeslot assigned to node 4 expires, and node 6 needs to delete the timeslot. Node 6 further deletes a timeslot indication of the node 6, and, based on a requirement, prolongs a timeslot of node 10 and shortens a timeslot of node 11 to obtain new timeslot information, and then broadcasts the forwarding indication of the second timeslot assignment message and the new timeslot information as a third timeslot assignment message. As shown in FIG. 4, compared with the second timeslot assignment message, the current third timeslot assignment message does not include the forwarding indication of node 4 and the timeslot information of nodes 2 and 3. A sending time point T_{6T} is in the forwarding timeslot of node 6. Node 6 may determine, based on a condition such as a historical data busy degree or channel quality of another node, whether to adjust a length of a timeslot of the another node. In an optional manner, if there is another node after node 12, node 6 further extends a time axis to indicate another timeslot when obtaining the new timeslot information.

Node 10 receives the third timeslot assignment message at a time piont T_{10R}, and sends service data in a data timeslot assigned to node 10 in the third timeslot assignment message.

In a PLC network, a node receives a plurality of timeslot assignment messages at different time points, and forwards the timeslot assignment message or sends service data based on a timeslot indication in the timeslot assignment message as long as receiving the message is received. If a timeslot indicated by a previous received timeslot assignment message has not been reached, a new timeslot assignment message is received, and a timeslot indicated by the new timeslot assignment message is earlier than the timeslot indicated by the previous timeslot assignment message, the node first forwards the timeslot assignment message or sends service data in the timeslot indicated by the new timeslot assignment message. If the timeslot indicated by the subsequently received new timeslot assignment message is later than the timeslot indicated by the previous timeslot assignment message, the node first forwards the timeslot assignment message or sends service data in the timeslot indicated by the previous timeslot assignment message.

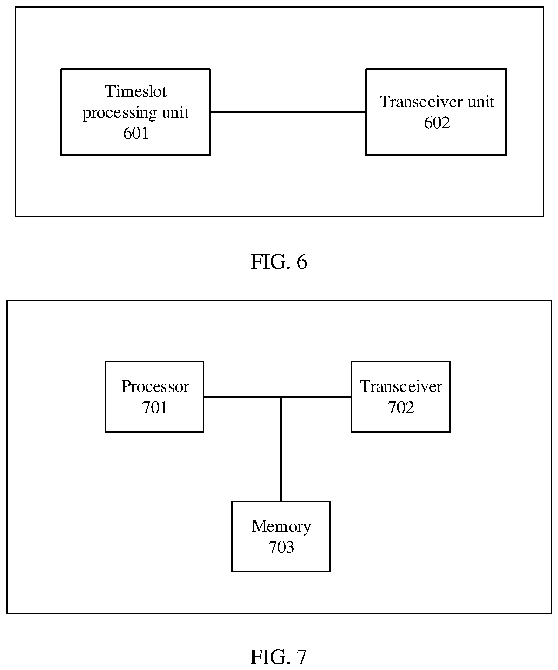

Refer to FIG. 6. An embodiment of this application provides an access point. The access point may include a timeslot processing unit 610 and a transceiver unit 620.

The transceiver unit 620 is configured to receive a first timeslot assignment message sent by an upper-level node, where the first timeslot assignment message includes forwarding information and first timeslot information; the forwarding information includes a forwarding indication indicating that at least one relay node needs to forward the first timeslot assignment message, the first timeslot information includes a forwarding timeslot indication assigned to the at least one relay node and used to forward the first timeslot assignment message, and data timeslot indications assigned to a plurality of nodes and used to send service data; and the plurality of nodes include the at least one relay node, and the at least one relay node includes a first relay node.

The timeslot processing unit 610 is configured to update the first timeslot information to obtain second timeslot information, where the updating includes deleting an expired timeslot indication from the first timeslot information, the expired timeslot indication is a timeslot indication indicating that an indicated timeslot has expired, and the second timeslot information includes a data timeslot indication of at least one node that is used to send service data.

The transceiver unit 620 is further configured to send a second timeslot assignment message including the forwarding information and the second timeslot information.

The sending manner is broadcasting. The first timeslot assignment message and the second timeslot assignment message may be beacon packets or MAP messages.

The updating further includes deleting a timeslot indication assigned to the first relay node from the first timeslot information, and the timeslot indication assigned to the first relay node includes a forwarding timeslot of the first relay node, or a forwarding timeslot and a data timeslot of the first relay node.

The timeslot processing unit 610 adjusts at least one timeslot indication that is not deleted, and the adjusting includes prolonging or shortening a timeslot.

Forwarding information in the second timeslot assignment message includes a forwarding indication indicating that the at least one relay node needs to forward the second timeslot assignment message, and the second timeslot information includes a forwarding timeslot indication assigned to the at least one relay node and used to forward the second timeslot assignment message.

Timeslots separately indicated by a forwarding timeslot indication and a data timeslot indication of at least one PCO that are included in the first timeslot information are adjacent.

The access point may be any node other than the head node in FIG. 3. A processing manner of the nodes in the embodiment corresponding to FIG. 3 should be jointly completed by the timeslot processing unit 610 and the transceiver unit 620. For details, refer to the content corresponding to FIG. 3.

Refer to FIG. 7. An embodiment of this application provides an access point. The access point may include a processor 710 and a transceiver 720. When the access point is run, the processor 710 executes computer instructions, so that the access point performs the method shown in FIG. 2. The optional embodiment corresponding to FIG. 2 is also applicable to the access point in this embodiment. Details are not described again.

In some embodiments, as shown in FIG. 7, the apparatus further includes a memory 730. The memory 730 may be configured to store the foregoing computer instructions and the like.

An embodiment of this application further provides a power line communications network, including at least one head node. Each head node is directly or indirectly connected to at least one relay node, and the relay node is the access point shown in FIG. 6 or FIG. 7.

It may be understood that, the processor in embodiments of this application may be a central processing unit (central processing unit, CPU), the processor may further be another general-purpose processor, a digital signal processor (digital signal processor, DSP), an application-specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium or write information into the storage medium. Certainly, the storage medium may be further a component of the processor. The processor and the storage medium may be located in an ASIC.

All or some of embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

Finally, it should be noted that the foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims as interpreted in accordance with Art. 69 of the EPC protocol.

## Claims

1. A timeslot assignment method for power line communication, comprising:
receiving (201), by a first relay node, a first timeslot assignment message sent by an upper-level node,
wherein the first timeslot assignment message comprises forwarding information and first timeslot information;
the forwarding information comprises a forwarding indication indicating that at least one relay node needs to forward the first timeslot assignment message, and
the first timeslot information comprises a forwarding timeslot indication assigned to the at least one relay node and used to forward the first timeslot assignment message, and data timeslot indications assigned to a plurality of nodes and used to send service data; and
the plurality of nodes comprise the at least one relay node, and the at least one relay node comprises the first relay node;
updating (203), by the first relay node, the first timeslot information to obtain second timeslot information, wherein the updating comprises deleting an expired timeslot indication from the first timeslot information, the expired timeslot indication is a timeslot indication indicating that an indicated timeslot has expired, and the second timeslot information comprises a data timeslot indication of at least one node that is used to send service data, wherein the updating further comprises adjusting at least one timeslot indication that is not deleted, and the adjusting comprises prolonging or shortening a timeslot based on a transmission parameter change; and
sending, (205), by the first relay node, a second timeslot assignment message comprising the forwarding information and the second timeslot information.

2. The method according to claim 1, wherein the updating comprises deleting a timeslot indication assigned to the first relay node from the first timeslot information, and the timeslot indication assigned to the first relay node comprises a forwarding timeslot of the first relay node, or a forwarding timeslot and a data timeslot of the first relay node.

3. The method according to any one of claims 1 to 2, wherein forwarding information in the second timeslot assignment message comprises a forwarding indication indicating that the at least one relay node needs to forward the second timeslot assignment message, and the second timeslot information comprises a forwarding timeslot indication assigned to the at least one relay node and used to forward the second timeslot assignment message.

4. The method according to any one of claims 1 to 2, wherein timeslots separately indicated by a forwarding timeslot indication and a data timeslot indication of at least one relay node that are comprised in the first timeslot information are adjacent.

5. The method according to any one of claims 1 to 2, wherein the first timeslot assignment message and the second timeslot assignment message may be beacon (Beacon) packets defined in the ITU-T G.hn standard or MAP messages defined in the IEEE 1901.1 standard.

6. An access point, comprising a timeslot processing unit (610) and a transceiver unit (620), wherein
the transceiver unit (620) is configured to receive a first timeslot assignment message sent by an upper-level node, wherein the first timeslot assignment message comprises forwarding information and first timeslot information; the forwarding information comprises a forwarding indication indicating that at least one relay node needs to forward the first timeslot assignment message, and the first timeslot information comprises a forwarding timeslot indication assigned to the at least one relay node and used to forward the first timeslot assignment message, and data timeslot indications assigned to a plurality of nodes and used to send service data; and the plurality of nodes comprise the at least one relay node, and the at least one relay node comprises a first relay node;
the timeslot processing unit (610) is configured to update the first timeslot information to obtain second timeslot information, wherein the updating comprises deleting an expired timeslot indication from the first timeslot information, the expired timeslot indication is a timeslot indication indicating that an indicated timeslot has expired, wherein to update further comprises to adjust at least one timeslot indication that is not deleted, and the adjusting comprises prolonging or shortening a timeslot based on a transmission parameter change, and the second timeslot information comprises a data timeslot indication of at least one node that is used to send service data; and
the transceiver unit (620) is configured to send a second timeslot assignment message comprising the forwarding information and the second timeslot information.

7. The access point according to claim 6, wherein the updating comprises deleting a timeslot indication assigned to the first relay node from the first timeslot information, and the timeslot indication assigned to the first relay node comprises a forwarding timeslot of the first relay node, or a forwarding timeslot and a data timeslot of the first relay node.

8. The access point according to any one of claims 6 to 7, wherein forwarding information in the second timeslot assignment message comprises a forwarding indication indicating that the at least one relay node needs to forward the second timeslot assignment message, and the second timeslot information comprises a forwarding timeslot indication assigned to the at least one relay node and used to forward the second timeslot assignment message.

9. The access point according to any one of claims 6 to 7, wherein timeslots separately indicated by a forwarding timeslot indication and a data timeslot indication of at least one relay node that are comprised in the first timeslot information are adjacent.

10. The access point according to any one of claims 6 to 7, wherein the first relay node adds timeslot indication information of a new node.

11. A power line communications network, comprising at least one head node and one or more relay nodes, wherein each head node is at least directly or indirectly connected to the one or more relay nodes, and the relay node is the access point according to any one of claims 6 to 10.

## Patentansprüche

1. Zeitschlitz-Zuweisungsverfahren für die Stromleitungskommunikation, das umfasst:
Empfangen (201), durch einen ersten Relais-Knoten, einer ersten Zeitschlitz-Zuweisungsnachricht, die durch einen Knoten der oberen Ebene gesendet wird,
wobei die erste Zeitschlitz-Zuweisungsnachricht Weiterleitungsinformationen und erste Zeitschlitzinformationen umfasst;
die Weiterleitungsinformationen eine Weiterleitungsangabe umfassen, die angibt, dass zumindest ein Relais-Knoten die erste Zeitschlitz-Zuweisungsnachricht weiterleiten muss, und
die ersten Zeitschlitzinformationen eine Weiterleitungszeitschlitzangabe, die dem zumindest einen Relais-Knoten zugewiesen ist und zum Weiterleiten der ersten Zeitschlitz-Zuweisungsnachricht verwendet wird, und Datenzeitschlitzangaben, die einer Vielzahl von Knoten zugewiesen sind und zum Senden von Dienstdaten verwendet werden, umfassen; und
die Vielzahl von Knoten den zumindest einen Relais-Knoten umfassen und der zumindest eine Relais-Knoten den ersten Relais-Knoten umfasst;
Aktualisieren (203), durch den ersten Relais-Knoten, der ersten Zeitschlitzinformationen, um zweite Zeitschlitzinformationen zu erhalten, wobei das Aktualisieren ein Löschen einer abgelaufenen Zeitschlitzangabe von den ersten Zeitschlitzinformationen umfasst, die abgelaufene Zeitschlitzangabe eine Zeitschlitzangabe ist, die angibt, dass ein angegebener Zeitschlitz abgelaufen ist, und die zweiten Zeitschlitzinformationen eine Datenzeitschlitzangabe zumindest eines Knotens, der zum Senden von Dienstdaten verwendet wird, umfassen, wobei das Aktualisieren ferner ein Anpassen zumindest einer nicht gelöschten Zeitschlitzangabe umfasst und das Anpassen ein Verlängern oder Verkürzen eines Zeitschlitzes basierend auf einer Übertragungsparameteränderung umfasst; und
Senden (205), durch den ersten Relais-Knoten, einer zweiten Zeitschlitz-Zuweisungsnachricht, die die Weiterleitungsinformationen und die zweiten Zeitschlitzinformationen umfasst.

2. Verfahren nach Anspruch 1, wobei das Aktualisieren ein Löschen einer Zeitschlitzangabe, die dem ersten Relais-Knoten zugewiesen ist, von den ersten Zeitschlitzinformationen umfasst und die Zeitschlitzangabe, die dem ersten Relais-Knoten zugewiesen ist, einen Weiterleitungszeitschlitz des ersten Relais-Knotens oder einen Weiterleitungszeitschlitz und einen Datenzeitschlitz des ersten Relais-Knotens umfasst.

3. Verfahren nach einem der Ansprüche 1 bis 2, wobei Weiterleitungsinformationen in der zweiten Zeitschlitz-Zuweisungsnachricht eine Weiterleitungsangabe umfassen, die angibt, dass der zumindest eine Relais-Knoten die zweite Zeitschlitz-Zuweisungsnachricht weiterleiten muss, und die zweiten Zeitschlitzinformationen eine Weiterleitungszeitschlitzangabe umfassen, die dem zumindest einen Relais-Knoten zugewiesen ist und zum Weiterleiten der zweiten Zeitschlitz-Zuweisungsnachricht verwendet wird,

4. Verfahren nach einem der Ansprüche 1 bis 2, wobei Zeitschlitze, die durch eine Weiterleitungszeitschlitzangabe und eine Datenzeitschlitzangabe zumindest eines Relais-Knotens, die in den ersten Zeitschlitzinformationen enthalten sind, getrennt angegeben werden, angrenzend sind.

5. Verfahren nach einem der Ansprüche 1 bis 2, wobei die erste Zeitschlitz-Zuweisungsnachricht und die zweite Zeitschlitz-Zuweisungsnachricht "Beacon"-("beacon"-) Pakete, die im ITU-T G.hn-Standard definiert sind, oder MAP-Nachrichten, die im IEEE 1901.1-Standard definiert sind, sein können.

6. Zugangspunkt, der eine Zeitschlitz-Verarbeitungseinheit (610) und eine Transceiver-Einheit (620) umfasst, wobei
die Transceiver-Einheit (620) zum Empfangen einer ersten Zeitschlitz-Zuweisungsnachricht, die durch einen Knoten der oberen Ebene gesendet wird, ausgelegt ist, wobei die erste Zeitschlitz-Zuweisungsnachricht Weiterleitungsinformationen und erste Zeitschlitzinformationen umfasst; die Weiterleitungsinformationen eine Weiterleitungsangabe umfassen, die angibt, dass zumindest ein Relais-Knoten die erste Zeitschlitz-Zuweisungsnachricht weiterleiten muss, und die ersten Zeitschlitzinformationen eine Weiterleitungszeitschlitzangabe, die dem zumindest einen Relais-Knoten zugewiesen ist und zum Weiterleiten der ersten Zeitschlitz-Zuweisungsnachricht verwendet wird, und Datenzeitschlitzangaben, die einer Vielzahl von Knoten zugewiesen sind und zum Senden von Dienstdaten verwendet werden, umfassen, und die Vielzahl von Knoten den zumindest einen Relais-Knoten umfassen und der zumindest eine Relais-Knoten einen ersten Relais-Knoten umfasst;
die Zeitschlitz-Verarbeitungseinheit (610) zum Aktualisieren der ersten Zeitschlitzinformationen, um zweite Zeitschlitzinformationen zu erhalten, ausgelegt ist, wobei das Aktualisieren ein Löschen einer abgelaufenen Zeitschlitzangabe von den ersten Zeitschlitzinformationen umfasst, die abgelaufene Zeitschlitzangabe eine Zeitschlitzangabe ist, die angibt, dass ein angegebener Zeitschlitz abgelaufen ist, wobei das Aktualisieren ferner ein Anpassen zumindest einer nicht gelöschten Zeitschlitzangabe umfasst und das Anpassen ein Verlängern oder Verkürzen eines Zeitschlitzes basierend auf einer Übertragungsparameteränderung umfasst und die zweiten Zeitschlitzinformationen eine Datenzeitschlitzangabe zumindest eines Knotens, der zum Senden von Dienstdaten verwendet wird, umfassen, und
die Transceiver-Einheit (620) zum Senden einer zweiten Zeitschlitz-Zuweisungsnachricht, die die Weiterleitungsinformationen und die zweiten Zeitschlitzinformationen umfasst, ausgelegt ist.

7. Zugangspunkt nach Anspruch 6, wobei das Aktualisieren ein Löschen einer Zeitschlitzangabe, die dem ersten Relais-Knoten zugewiesen ist, von den ersten Zeitschlitzinformationen umfasst und die Zeitschlitzangabe, die dem ersten Relais-Knoten zugewiesen ist, einen Weiterleitungszeitschlitz des ersten Relais-Knotens oder einen Weiterleitungszeitschlitz und einen Datenzeitschlitz des ersten Relais-Knotens umfasst,

8. Zugangspunkt nach einem der Ansprüche 6 bis 7, wobei Weiterleitungsinformationen in der zweiten Zeitschlitz-Zuweisungsnachricht eine Weiterleitungsangabe umfassen, die angibt, dass der zumindest eine Relais-Knoten die zweite Zeitschlitz-Zuweisungsnachricht weiterleiten muss, und die zweiten Zeitschlitzinformationen eine Weiterleitungszeitschlitzangabe umfassen, die dem zumindest einen Relais-Knoten zugewiesen ist und zum Weiterleiten der zweiten Zeitschlitz-Zuweisungsnachricht verwendet wird.

9. Zugangspunkt nach einem der Ansprüche 6 bis 7, wobei Zeitschlitze, die durch eine Weiterleitungszeitschlitzangabe und eine Datenzeitschlitzangabe zumindest eines Relais-Knotens, die in den ersten Zeitschlitzinformationen enthalten sind, getrennt angegeben werden, angrenzend sind.

10. Zugangspunkt nach einem der Ansprüche 6 bis 7, wobei der erste Relais-Knoten Zeitschlitzangabeinformationen eines neuen Knotens hinzufügt.

11. Stromleitungskommunikationsnetz, das zumindest einen "Head"-Knoten und einen oder mehrere Relais-Knoten umfasst, wobei jeder "Head"-Knoten zumindest direkt oder indirekt mit dem einen oder den mehreren Relais-Knoten verbunden ist und der Relais-Knoten der Zugangspunkt nach einem der Ansprüche 6 bis 10 ist.

## Revendications

1. Procédé d'attribution de créneaux temporels pour communication par courants porteurs en ligne, comprenant :
la réception (201), par un premier nœud relais, d'un premier message d'attribution de créneaux temporels envoyé par un nœud de niveau supérieur,
le premier message d'attribution de créneaux temporels comprenant des informations de transfert et des premières informations de créneaux temporels ;
l'information de transfert comprenant une indication de transfert indiquant qu'au moins un nœud relais doit transférer le premier message d'attribution de créneaux temporels, et
la première information de créneaux temporels comprenant une indication de créneau temporel de transfert attribuée à l'au moins un nœud relais et utilisée pour transférer le premier message d'attribution de créneaux temporels, et des indications de créneaux temporels de données attribuées à une pluralité de nœuds et utilisées pour envoyer des données de service ; et
la pluralité de nœuds comprenant l'au moins un nœud relais, et l'au moins un nœud relais comprenant le premier nœud relais ;
la mise à jour (203), par le premier nœud relais, des premières informations de créneaux temporels pour obtenir des secondes informations de créneaux temporels, la mise à jour comprenant la suppression d'une indication de créneau temporel expiré des premières informations de créneaux temporels, l'indication de créneau temporel expiré étant une indication de créneau temporel indiquant qu'un créneau temporel indiqué a expiré, et les secondes informations de créneaux temporels comprenant une indication de créneau temporel de données d'au moins un nœud qui est utilisée pour envoyer des données de service, la mise à jour comprenant en outre l'ajustement d'au moins une indication de créneau temporel qui n'est pas supprimée, et l'ajustement comprenant la prolongation ou le raccourcissement d'un créneau temporel basé sur un changement de paramètre de transmission ; et
l'envoi (205), par le premier nœud relais, d'un second message d'attribution de créneaux temporels comprenant les informations de transfert et les secondes informations de créneaux temporels.

2. Procédé selon la revendication 1, la mise à jour comprenant la suppression d'une indication de créneau temporel attribuée au premier nœud relais des premières informations de créneaux temporels, et l'indication de créneau temporel attribuée au premier nœud relais comprenant un créneau temporel de transfert du premier nœud relais, ou un créneau temporel de transfert et un créneau temporel de données du premier nœud relais.

3. Procédé selon l'une quelconque des revendications 1 à 2, les informations de transfert dans le second message d'attribution de créneaux temporels comprenant une indication de transfert indiquant que l'au moins un nœud relais doit transférer le second message d'attribution de créneaux temporels, et les secondes informations de créneaux temporels comprenant une indication de créneau temporel de transfert attribuée à l'au moins un nœud relais et utilisée pour transférer le second message d'attribution de créneaux temporels.

4. Procédé selon l'une quelconque des revendications 1 à 2, des créneaux temporels séparément indiqués par une indication de créneau temporel de transfert et une indication de créneau temporel de données d'au moins un nœud relais qui sont comprises dans les premières informations de créneaux temporels étant adjacents.

5. Procédé selon l'une quelconque des revendications 1 à 2, le premier message d'attribution de créneaux temporels et le second message d'attribution de créneaux temporels pouvant être des paquets de balise (Beacon) définis dans la norme ITU-T G.11n ou des messages MAP définis dans la norme IEEE 1901.1.

6. Point d'accès, comprenant une unité de traitement de créneaux temporels (610) et une unité d'émission-réception (620),
l'unité d'émission-réception (620) étant configurée pour recevoir un premier message d'attribution de créneaux temporels envoyé par un nœud de niveau supérieur, le premier message d'attribution de créneaux temporels comprenant des informations de transfert et des premières informations de créneaux temporels ; les informations de transfert comprenant une indication de transfert indiquant qu'au moins un nœud relais doit transférer le premier message d'attribution de créneaux temporels, et les premières informations de créneaux temporels comprenant une indication de créneau temporel de transfert attribuée à l'au moins un nœud relais et utilisée pour transférer le premier message d'attribution de créneaux temporels, et des indications de créneaux temporels de données attribuées à une pluralité de nœuds et utilisées pour envoyer des données de service ; et la pluralité de nœuds comprenant l'au moins un nœud relais, et l'au moins un nœud relais comprenant un premier nœud relais ;
l'unité de traitement de créneaux temporels (610) étant configurée pour mettre à jour les premières informations de créneaux temporels pour obtenir des secondes informations de créneaux temporels, la mise à jour comprenant la suppression d'une indication de créneau temporel expiré des premières informations de créneaux temporels, l'indication de créneau temporel expiré étant une indication de créneau temporel indiquant qu'un créneau temporel indiqué a expiré, la mise à jour comprenant en outre l'ajustement d'au moins une indication de créneau temporel qui n'est pas supprimée, et l'ajustement comprenant la prolongation ou le raccourcissement d'un créneau temporel basé sur un changement de paramètre de transmission, et les secondes informations de créneaux temporels comprenant une indication de créneau temporel de données d'au moins un nœud qui est utilisée pour envoyer des données de service ; et
l'unité d'émission-réception (620) étant configurée pour envoyer un second message d'attribution de créneaux temporels comprenant les informations de transfert et les secondes informations de créneaux temporels.

7. Point d'accès selon la revendication 6, la mise à jour comprenant la suppression d'une indication de créneau temporel attribuée au premier nœud relais des premières informations de créneaux temporels, et l'indication de créneau temporel attribuée au premier nœud relais comprenant un créneau temporel de transfert du premier nœud relais, ou un créneau temporel de transfert et un créneau temporel de données du premier nœud relais.

8. Point d'accès selon l'une quelconque des revendications 6 à 7, les informations de transfert dans le second message d'attribution de créneaux temporels comprenant une indication de transfert indiquant que l'au moins un nœud relais doit transférer le second message d'attribution de créneaux temporels, et les secondes informations de créneaux temporels comprenant une indication de créneau temporel de transfert attribuée à l'au moins un nœud relais et utilisée pour transférer le second message d'attribution de créneaux temporels.

9. Point d'accès selon l'une quelconque des revendications 6 à 7, des créneaux temporels séparément indiqués par une indication de créneau temporel de transfert et une indication de créneau temporel de données d'au moins un nœud relais qui sont comprises dans les premières informations de créneaux temporels étant adjacents.

10. Point d'accès selon l'une quelconque des revendications 6 à 7, le premier nœud relais ajoutant des informations d'indication de créneau temporel d'un nouveau nœud.

11. Réseau de communications par courants porteurs en ligne, comprenant au moins un nœud principal et un ou plusieurs nœuds relais, chaque nœud principal étant au moins directement ou indirectement connecté au ou aux nœuds relais, et le nœud relais étant le point d'accès selon l'une quelconque des revendications 6 à 10.
